# EUROPÄISCHE PATENTSCHRIFT

(11) **EP 0 708 546 B1**
(45) Veröffentlichungstag und Bekanntmachung des Hinweises auf die Patenterteilung: **09.07.2008**
(21) Anmeldenummer: 95116219.7
(22) Anmeldetag: 14.10.1995
(51) Int. Cl.: H04L 27/34, H04L 1/24

(54) **Testfolgenübertragungsverfahren für Rundfunksender**
Method for transmitting test sequences for radio transmitters
Procédé de communication de séquences de test dans des émetteurs radio

(30) Priorität: 21.10.1994 DE 4437617
(43) Veröffentlichungstag der Anmeldung: 24.04.1996
(73) Patentinhaber: Deutsche Telekom AG, 53113 Bonn (DE); Continental Electronics Corporation, Dallas Texas 75227 (US)
(72) Erfinder: Weber, Klaus, Dipl.-Ing., D-13357 Berlin (DE); Brakemeier, Achim, Dr. Dipl.-Ing., D-89134 Blaustein (DE); Rudolph, Dietmar, Prof. Dr.Dipl.-Ing., D-14163 Berlin (DE)

(56) Entgegenhaltungen:
- EP-A- 0 193 655
- EP-A- 0 629 069
- EP-A- 0 708 545
- WO-A-95/24781
- DE-A- 4 130 865
- US-A- 4 399 558
- US-A- 4 804 931
- US-A- 4 955 072

## Beschreibung

Die Erfindung betrifft ein digitales Modulationsverfahren und eine Schaltungsanordnung zur Durchführung des Verfahrens gemäß den Oberbegriffen der Ansprüche 1 und 8.

Der Wunsch der Rundfunkhörer nach besserer Übertragungsqualität wurde in der Vergangenheit durch die Einführung der Frequenzmodulation im VHF-Bereich und der beabsichtigten Einführung des digitalen Rundfunks (DAB) im VHF-Bereich und L-Band Rechnung getragen. Das DAB-Verfahren ist in "Final Draft prETS300401" als European Telecommunication Standard beschrieben. Dieses Verfahren zeichnet sich als ein Mehrträgerverfahren aus. Bei diesem Verfahren werden eine Vielzahl von Unterträgern entsprechend dem digitalisierten Eingangssignal in ihren Phasen moduliert und gemeinsam ausgesendet. Besonders störsicher und damit für die Übertragung von digitalisierten Signalen geeignet wird dieses Verfahren, wenn eine relativ große Bandbreite verwendet wird. Um gleichzeitig eine gute Ausnutzung der Frequenzbereiche zu erreichen, werden bei diesem Verfahren mehrere Programme zusammengeführt und im Frequenzmultiplexverfahren über einen gemeinsamen Sender abgestrahlt.

Die Rundfunkprogramme in den Frequenzbereichen Lang-, Mittel- und Kurzwelle (AM - Bänder) werden bislang mit Amplitudenmodulation und der damit verbundenen geringen Qualität des Nachrichtenkanals übertragen, wodurch diese Frequenzbereiche an Akzeptanz verloren haben. Eine Digitalisierung der genannten Frequenzbereiche wird eine Erhöhung der Übertragungsqualität ergeben und die Vorteile der für diese Frequenzen gültigen charakteristischen Ausbreitungsmerkmale erhalten. Es ist zu erwarten, daß es mit Sendern höherer Leistung (10 bis 100 kW) und digitalisierter Übertragung möglich sein wird, größere Teile eines Kontinents mittels eines Lang-, Mittel- oder Kurzwellensenders mit einem Signal hoher Qualität zu versorgen. Das bekannte DAB-Verfahren eignet sich für den relativ kleinen Frequenzbereich der AM-Bänder nicht, da die Bandbreite, die bei DAB verwendet wird, in diesen Bändern nicht zur Verfügung steht, da die AM-Sender nur mit einer Bandbreite von 9 kHz bis 20 kHz betrieben werden. Die Einhaltung dieser Bandbreiten wird auch deshalb von Sendern mit digitalisierten Programmen, gefordert, um die Nachbarkanalstörungen zu noch vorhandenen analogen AM-Sendern klein zu halten.

Neben der beschriebenen großen Bandbreite, die für die Übertragung mit einem Mehrträgerverfahren notwendig ist, wirken sich die besonders hohen Aussteuerungsspitzen bei einem Mehrträgerverfahren negativ aus, da ein Sender für diese Modulation derart auszulegen ist, daß die Spitzenleistung des Signals noch übertragen werden kann.

Wegen der genannten hohen Ausgangsleistung der betrachteten Sender (10 bis 100 kW) erscheint es unbedingt notwendig zu sein, auf den Wirkungsgrad des Senders Wert zu legen.

Aus der Literatur (L.Kahn, Single-Sideband Transmission by Envelope Elimination and Restoration, Proceedings of the I.R.E,1952, S.803 ff) ist ein Hochfrequenzverstärker bekannt, der mit hohem Wirkungsgrad betrieben wird. In der angegebenen Literaturstelle ist ein Sender beschrieben, der sich durch die getrennte Ansteuerung der Leistungsendstufe mit Betrag- und Phasensignal auszeichnet. Hierbei wird aus dem eingangsseitigen Einseitenbandsignal durch Hüllkurvengleichrichtung das Hüllkurvensignal und durch Begrenzung der Amplitude des Eingangssignales ein Signal abgeleitet, das die Phaseninformation enthält aber in der Amplitude begrenzt ist. Die begrenzte hochfrequente Schwingung und das Hüllkurvensignal werden der im überspannten C-Betrieb arbeitenden Endstufe zugeführt, wodurch eine Verstärkung eines Einseitenbandsignales mit hohem Wirkungsgrad erzielt wird.

In der EP0193655A1 ist ein Rundfunksender mit hoher Leistung und mit hohem Wirkungsgrad beschrieben, der geeignet ist, ein Einseitenbandsignal abzustrahlen. Bei diesem Sender wird das analoge niederfrequente Modulationssignal abgetastet, digitalisiert und mittels Signalprozessortechnik in ein komplexes Signal, bestehend aus Real- und Imaginärteil, umgewandelt. Diese Umwandlung erfolgt mittels eines Hilbertransformators entsprechend der aus der Literatur bekannten Phasenmethode. Anschließend wird aus diesen Komponenten der Betrag und die Phase des Signales ermittelt. Wie in der oben angegebenen Schaltung werden dann das Gitter der Endstufenröhre mit dem phasenmodulierten hochfrequenten Träger angesteuert und die Anode mit dem Betragssignal, das dem Hüllkurvensignal entspricht, angesteuert. In den genannten Fällen wird ein analoges Signal mit hohem Wirkungsgrad übertragen.

Aus der EP 0 629 069 A2 ist es bekannt, für die digitale Einträgermodulation durch zu übertragende digitale Daten nacheinander mehrstufige Symbole aus einem vordefinierten komplexwertigen Symbolalphabet auszuwählen und zu einer mit den Symbolen gewichteten Pulsfolge auf der Zeitachse aufzureihen. Die Symbole des Symbolalphabets können dabei in der Darstellung der Konstellation des komplexwertigen Symbolalphabets in einer komplexen Ebene auf konzentrischen kreisen um einen Nullpunkt liegen.

Aufgabe der Erfindung ist es, ein Sendeverfahren zu schaffen, das mit geringer Bandbreite und bei Vorgabe eines maximalen Amplitudenhubes eine möglichst störungsfreie Übertragung erzielt.

Diese Aufgabe wird erfindungsgemäß, durch die in dem Patentanspruch 1 angegebenen Merkmale gelöst. Vorteilhafte Weiterbildungen der Erfindung sind in den Unteransprüchen angegeben.

Die Erfindung ermöglicht in vorteilhafter Weise die Erzielung einer geringen Bandbreite bei der digitalen Übertragung von Signalen und ermöglicht damit digitalen Rundfunk auf Lang-, Mittel- und Kurzwelle. Anspruch 2 zeigt eine vorteilhafte Ausgestaltung der Erfindung hinsichtlich der Kompensation von Übertragungsstörungen. In Anspruch 6 ist eine Ausgestaltung der Erfindung aufgezeigt mit der vorteilhaft die Verwendung von Schaltverstärkern unterstützt wird. Anspruch 7 zeigt den Einsatz der Erfindung im Zusammenhang mit einem Verstärkungsverfahren, das sehr hohe Wirkungsgrade aufweist.

Die Erfindung wird anhand der Bilder Fig. 1 bis Fig.6 erläutert.
Fig.1 zeigt die Symbolkonstellation einer 64-QAM Modulation,
Fig.2 zeigt die Symbolkonstellation einer 32-APSK -Modulation in nicht kompakter Form,
Fig.3 zeigt die Symbolkonstellation einer 32-APSK -Modulation in kompakter Form,
Fig.4 zeigt die Symbolkonstellation einer 64-APSK -Modulation mit einem Symbol im Nullpunkt,
Fig.5 zeigt die Symbolkonstellation einer 64-APSK -Modulation, die kein Symbol im Nullpunkt aufweist,
Fig.6 zeigt die Rahmenstruktur der bevorzugten Modulation,
Fig.7 zeigt das Blockschaltbild einer Aufbereitungsschaltung zur Ansteuerung für einen Sender, der in Hüllkurve und Betrag getrennt ansteuerbar ist,
Fig.8 zeigt das Blockschaltbild eines derartigen Senders mit einer röhrenbestückten Endstufe und
Fig.9 zeigt das Blockschaltbild eines derartigen Senders mit einer transistorisierten Endstufe.

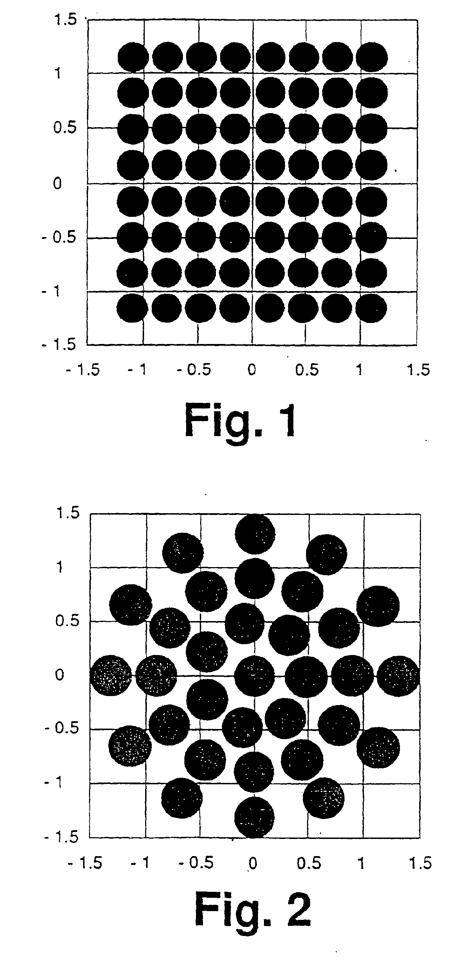

Die häufig verwendete Modulationsart 64-QAM ist mit ihrem Symbolalphabet, bestehend aus 64 Symbolen, in Fig. 1 dargestellt. Es ist bekannt, daß sich mit zunehmender Stufenzahl der verwendeten Modulation die für die Übertragung des Signales notwendige Bandbreite reduziert. Gleichzeitig nimmt mit der Anzahl der Symbole bei vorgegebener maximalen Amplitude der Signalabstand zwischen den Symbolen ab, wodurch die Störanfälligkeit der Übertragung wieder zunimmt. Für die Übertragung im genannten Lang- bis Kurzwellenbereich erscheint eine 64- oder 32-stufige Modulation ein vertretbarer Kompromiß zwischen der Störanfälligkeit und der notwendigen Bandbreite zu sein.

Um eine möglichst wirtschaftliche Ausnutzung des Senders zu gewährleisten, ist es notwendig, den Amplitudenbedarf der Modulation möglichst gering zu halten.

Dem Konstellationsdiagramm in Fig. 1 kann entnommen werden, daß der maximale Betrag der Symbole nur bei den vier Ecksymbolen der insgesamt 64 Symbole auftritt. Das heißt, daß der verfügbare Amplitudenhub des Senders relativ schlecht ausgenutzt wird.

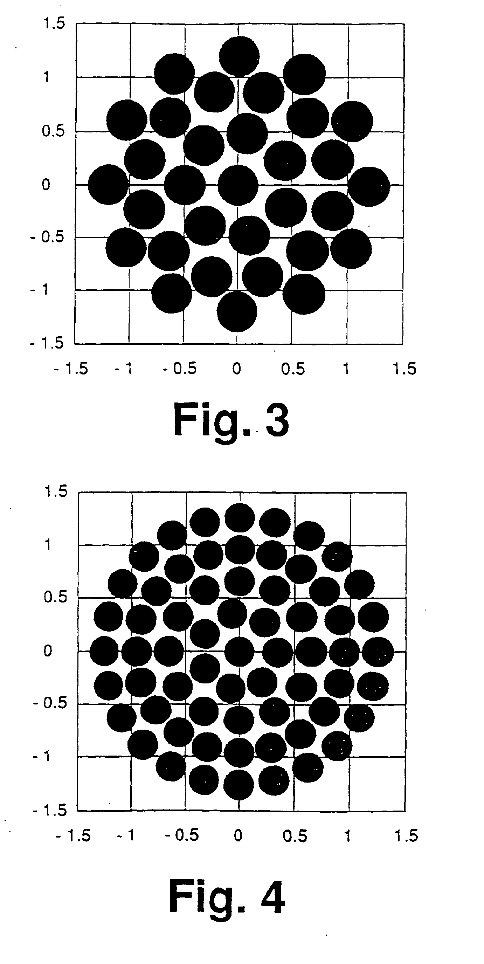

Fig.4 zeigt die Konstellation einer 64-wertigen Modulation (64-APSK), deren Symbole im Inneren eines Kreises liegen. Im Vergleich zu dem in Fig. 1 dargestellten Symbolalphabet wird bei dieser Konstellation der maximale Amplitudenwert anstelle von 4 Ecksymbolen von 24 Symbolen verwendet. Dadurch wird eine gegenüber dem in Fig.1 dargestellten Modulationsalphabet der 64-QAM verbesserte Ausnutzung des Amplitudenhubes deutlich.

In Fig.2 ist eine Konstellationsebene einer 32-wertigen Modulation dargestellt, deren Symbole sich im Innern eines Kreises befinden. Eine kompakte Ausführungsform, deren Symbole den Innenraum der Kreisfläche besser ausnutzen, ist in Fig.3 dargestellt. Der Vergleich zeigt, daß allein durch eine kompaktere Anordnung neben der kreisförmigen Anordnung eine weitere Verbesserung der Ausnutzung des Amplitudenhubes erreicht wird. Allgemein kann gesagt werden, daß bei Vorgabe eines Symbolabstandes die kreisförmige Umgrenzung der Konstellation eine optimale Ausnutzung der zur Verfügung stehenden maximalen Amplitude gewährleistet.

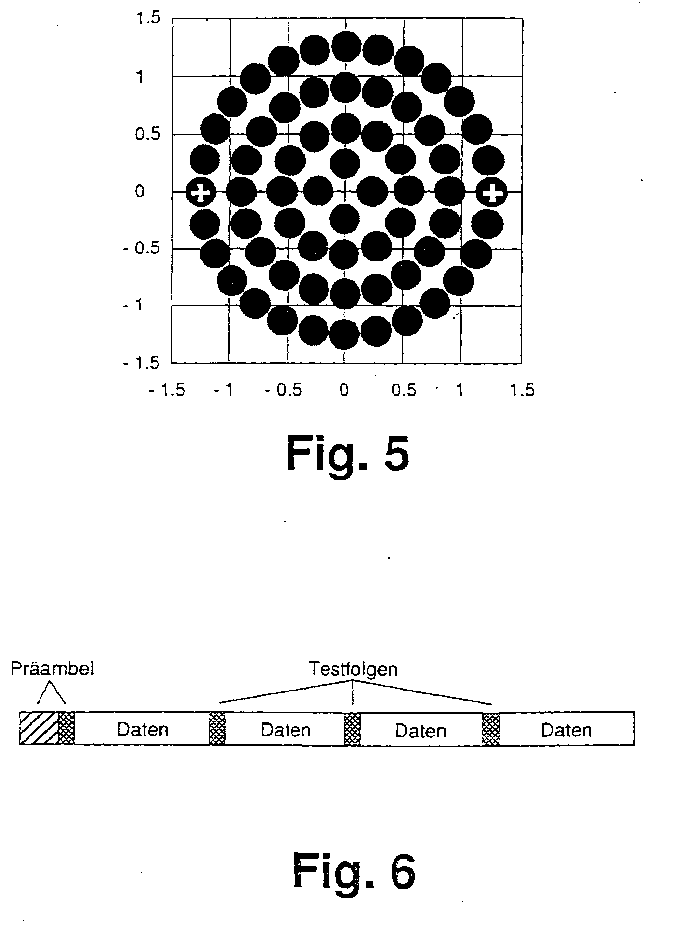

In Fig.5 wird eine leicht abgewandelte Konstellation einer 64-wertigen Modulation gezeigt, die sich dadurch auszeichnet, daß der Nullpunkt kein Symbol enthält. Insbesondere für Sender, die eine Verzerrung bei sehr kleinen Amplituden aufweisen, ist diese Konstellation für die Übertragung geeignet, da der verzerrungsreiche Bereich in der Übertragung ausgespart wird.

Durch diese in den Fig.2 bis Fig.5 ringförmigen Symbolkonstellationen wird eine gegenüber anderen Konstellationen verbesserte Ausnutzung des Amplitudenbereiches erzielt.

Da bei der Übertragung der Signale vom Sender zum Empfänger mit Störungen zu rechnen ist, wird die Aussendung der Daten in einer Rahmenstruktur vorgenommen. In Fig.6 ist ein beispielhafter Rahmen dargestellt. Zu Beginn eines jeden Rahmen wird eine Präambel und eine Testfolge ausgesendet. Die Präambel enthält Informationen unabhängig vom Programminhalt (z.B. Senderkennung, Programmart, Personenruf, Uhrzeit). Die Testfolge ist mit vordefinierten Symbolen ausgebildet, die zur Adaptierung des Empfängers verwendet werden. Werden diese vordefinierten Testsymbole im Empfänger verzerrt empfangen, so ist es möglich, da das unverzerrte Symbol als bekannt vorausgesetzt wird, den Übertragungskanal im Empfänger mathematisch zu modellieren und die danach eintreffenden gleichartig verzerrten Symbole mit dem zuvor gewonnenen Kanalmodell in den unverzerrten Zustand zurückzurechnen.

Um eine ausreichend genaue Modellierung des Kanals zu erreiehen, sollte die Testfolge mindestens die doppelte Kanalstoßantwortlänge aufweisen. Für den Bereich der Mittelwelle wird mit einer Kanalstoßantwortlänge von 2ms gerechnet.

Für die Testfolge werden relativ einfache Symbole vorgeschlagen, die Bestandteil einer Untermenge des vorgesehenen Symbolalphabets sind. In Fig.5 ist eine solche Untermenge durch Kreuze in den ausgewählten Symbolpunkten dargestellt. Als Beispiel sind 2 Punkte, die im Kreis gegenüberliegen, gewählt. Diese Auswahl der Punkte entspricht der Symbolkonstellation einer Zweiphasenumtastung(2-PSK). Werden anstelle der zwei auf einem Kreis gegenüberliegende Punkte vier um 90 Grad versetzte Kreispunkte gewählt, so entspricht diese Untermenge der 4-PSK-Modulation.

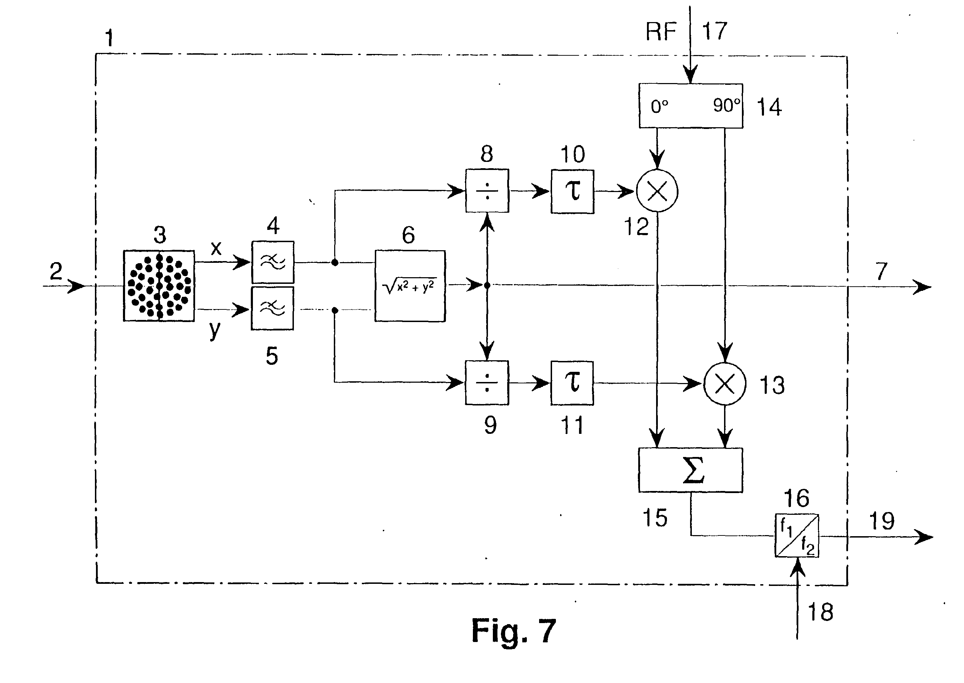

Fig. 7 zeigt eine Schaltungsanordnung zur Durchführung des erfindungsgemäßen Modulationsverfahrens. Das digitale Eingangssignal 2 der in Fig. 7 dargestellten digitalen Aufbereitungsschaltung 1 wird in dem Symbolwandler 3 in ein komplexes Signal, das in Form von Real- und Imaginärteil dargestellt wird, gewandelt. Hierbei wählt jedes Dateneingangswort aus einem vordefinierten Symbolalphabet ein komplexes Symbol aus. Eine Bandbegrenzung des Real- und des Imaginärteiles erfolgt durch die Filter 4 und 5. Aus den so berechneten Komponenten wird in dem Betragsbildner 6 der Betrag des komplexen Signals ermittelt, der einerseits den Hüllkurvenverstärker 20 in den Figuren Fig. 2 und Fig. 3 ansteuert und andererseits die Komponenten der bandbegrenzten Signale in den Dividierern 7 und 8 normiert. Diese so berechneten normierten Komponenten werden den Verzögerern 10 und 11 zugeführt, um die Signallaufzeiten, von denen die im niederfrequenten Hüllkurvenzweig, bestehend aus Hüllkurvenverstärker 20 mit Filter 22, im allgemeinen größer ist als im hochfrequenten Phasenzweig, bestehend aus Treiberstufe 21, einander anzupassen .

Die verzögerten, normierten Signale werden den Träger- bzw. Zwischenfrequenzmodulatoren 12 und 13 an ihren Modulationssignaleingängen zugeführt. Diese Modulatoren werden an ihren Trägersignaleingängen mit den um 90 Grad zueinander verschobenen Komponenten der Träger- bzw. Zwischenfrequenzschwingung angesteuert und geben die modulierten Ausgangssignale an die Additionsschaltung 15. Im Fall der Benutzung einer Zwischenfrequenz wird der Additionstufe 15 der Frequenzumsetzer 16 nachgeschaltet, der die Zwischenfrequenz auf die eigentliche Trägerfrequenz umsetzt.

Für die Funktion der Schaltung ist es prinzipiell gleichbedeutend, ob die Modulatoren 12 und 13, die Phasenaufteilung 14 und die Additionsschaltung 15 in Form von analogen Schaltungen arbeiten oder die notwendigen Operationen in digitalisierter Form durchgeführt werden. Bei Verwendung von analogen Modulatoren sind die Verzögerer 10 und 11 um die entsprechenden Digital-Analog-Wandler zu ergänzen und bei Verwendung in digitaler Form das Ausgangssignal 19 zusätzlich digital-analog zu wandeln.

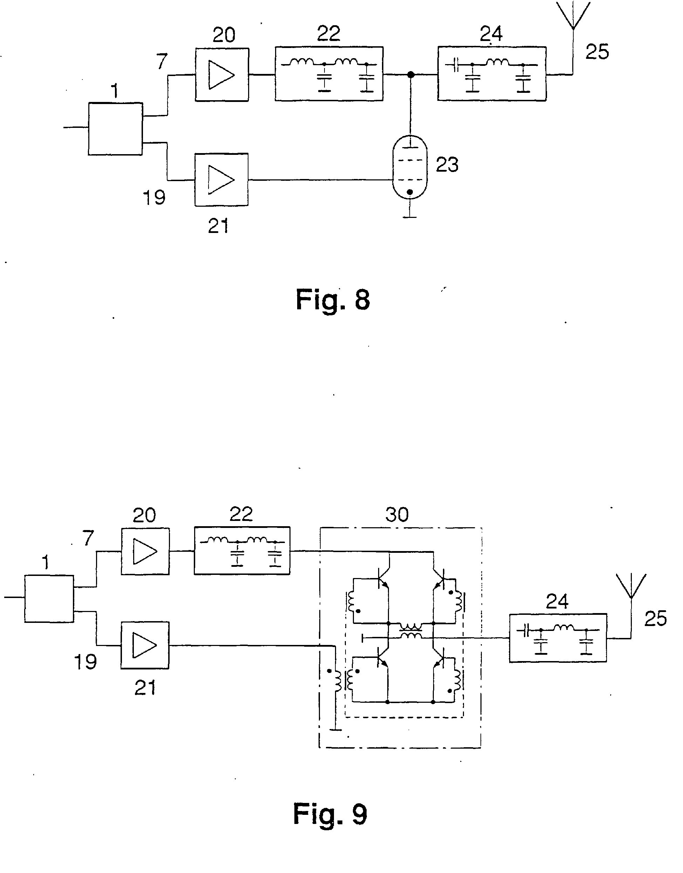

Fig.8 und Fig.9 zeigen geeignete Verstärkeranordnungen, die mit der vorangehend beschriebenen Aufbereitungsschaltung zusammenschaltbar sind.

Das in der Aufbereitungsschaltung gewonnene phasenmodulierte und normierte Trägerfrequenzsignal wird zur weiteren Verstärkung der Hochfrequenztreiberstufe 21 zugeführt, die eine für die Endstufe 23 oder 30 ausreichende Ansteuerspannung zur Verfügung stellt.

Das Betragssignal 7 wird mittels des Hüllkurvenverstärkers 20, der vorzugsweise als Schaltverstärker mit hohem Wirkungsgrad arbeitet, verstärkt. Als Schaltverstärker eignen sich Verstärker, die nach dem Prinzip des Tiefsetzstellers (pulsdauermodulierender Verstärker) oder nach dem Pulsstufenverstärkerprinzip arbeiten. Diesen Verstärkertypen ist gemeinsam, daß sie in der Lage sind, niederfrequente Signale inklusive deren Gleichspannungsanteile zu übertragen.

Als Endstufe eignet sich die in Fig.8 gezeigte Elektronenröhre 23, die ihre Anodenspannung aus dem niederfrequenten Hüllkurvenverstärkerzweig bezieht, der aus dem Verstärker 20 und dem nachgeschalteten Filter 22 besteht. Die Röhre wird, um einen hohen Wirkungsgrad zu erzielen, überspannt im C-Betrieb (Stromflußwinkel kleiner 90 Grad) betrieben. Über die Anodenspannung moduliert die Röhre 23 die am Steuergitter anliegende hochfrequente Trägerschwingung, die die Phasenmodulation enthält, in ihrer Amplitude.

Anstelle der Elektronenröhre 23 in Fig.8 kann alternativ eine transistorisierte Endstufe 30 verwendet werden, wie es in Fig.9 gezeigt wird. Vorteilhaft ist die Verwendung der dargestellten Brückenschaltung, in der die Transistoren kreuzweise im Schaltbetrieb betrieben werden. Der verwendete Schaltbetrieb gewährleistet einen hohen Wirkungsgrad.

## Patentansprüche

1. Digitales Modulationsverfahren für Rundfunksender zur Modulation im Einträgerverfahren im Frequenzbereich der Lang-, Mittel- und Kurzwelle, bei welchem durch die zu übertragenden digitalen Daten nacheinander mehrstufige Symbole aus einem vordefinierten komplexwertigen Symbolalphabet ausgewählt und zu einer mit den Symbolen gewichteten Pulsfolge auf der Zeitachse aufgereiht werden, **dadurch gekennzeichnet, dass** die mit den Symbolen gewichtete Pulsfolge durch einen Tiefpass auf die für den Frequenzbereich notwendige Bandbreite begrenzt wird, dass die zu übertragenden Symbole in Form von sich periodisch wiederholenden Rahmen, die aus jeweils einer Datensymbolfolge und einer diese Symbolfolge ergänzenden Testfolge bestehen, die zum Ausmessen der Übertragungsstrecke dient, übertragen werden und dass die Symbole der Testfolge einer Untermenge des Symbolalphabets, das für die Datenübertagung verwendet wird, angehören, wobei die Symbole der Testfolge auf einem Kreis um den Nullpunkt der Darstellung der Konstellation des Symbolalphabets in einer komplexen Ebene liegen.

2. Verfahren nach Anspruch 1, **dadurch gekennzeichnet, dass** die Testfolgen periodisch zu Präambelfolgen erweitert werden, die neben den Testfolgen noch Zusatzinformationen enthalten.

3. Verfahren nach Anspruch 1, **dadurch gekennzeichnet, dass** die Symbole aus einem Symbolalphabet entnommen werden, dessen Symbolkonstellation durch einen kreisförmigen Umriß **gekennzeichnet** ist.

4. Verfahren nach Anspruch 3, **dadurch gekennzeichnet, dass** der Mittelpunkt der Symbolkonstellation frei von Symbolen ist.

5. Verfahren nach Anspruch 1, **dadurch gekennzeichnet, dass** die Symbole in eine Amplituden- und eine Phaseninformation aufgeteilt werden und einen Sender, der nach Hüllkurve und Phase getrennt moduliert wird, ansteuern.

## Claims

1. Digital modulation method for broadcast transmitters for modulation in the single-carrier method in the long-wave, medium-wave, and short-wave frequency ranges, in which method multivalued symbols are sequentially selected from a predefined complex-valued symbol alphabet as a function of the digital data to be transmitted and are lined up along the time axis into a pulse train weighted by the symbols, **characterized in that** the pulse train weighted by the symbols is limited by a low-pass filter to the bandwidth required for the frequency range, **in that** the symbols to be transmitted are transmitted as periodically repeating frames, each consisting of a data symbol sequence and a test sequence that complements this symbol sequence and that serves to characterize the transmission path, and **in that** the symbols of the test sequence belong to a subset of the symbol alphabet used for the data transmission, wherein, in a complex plane, the symbols of the test sequence lie on a circle centered about the zero point of the constellation of the symbol alphabet.

2. Method according to claim 1, **characterized in that** the test sequences are periodically expanded into preamble sequences that contain additional information along with the test sequences.

3. Method according to claim 1, **characterized in that** the symbols are taken from a symbol alphabet whose symbol constellation is **characterized by** a circular outline.

4. Method according to claim 3, **characterized in that** the center point of the symbol constellation is free of symbols.

5. Method according to claim 1, **characterized in that** the symbols are divided into amplitude information and phase information, and drive a transmitter that is separately modulated by envelope and phase.

## Revendications

1. Procédé de modulation numérique pour émetteurs radio permettant la modulation à porteuse unique dans la gamme de fréquence des ondes longues, moyennes et courtes, dans lequel des symboles multiniveau sont choisis l'un après l'autre, par les données numériques à transmettre, dans un alphabet de symboles à valeur complexe prédéfini et enchaînés pour former un train d'impulsions pondéré avec les symboles sur l'axe temporel, **caractérisé en ce que** le train d'impulsions pondéré avec les symboles est limité, par un filtre passe-bas, à la largeur de bande nécessaire au domaine de fréquence, **en ce que** les symboles à transmettre sont transmis sous la forme de trames se répétant périodiquement qui sont composées d'une séquence de symboles de données et d'une séquence de test complétant ladite séquence de symboles servant à mesurer le trajet de transmission, et **en ce que** les symboles de la séquence de test appartiennent à un sous-ensemble de l'alphabet de symboles utilisé pour la transmission de données, les symboles de la séquence de test se situant sur un cercle autour du point zéro de la représentation de la constellation de l'alphabet de symboles dans un plan complexe.

2. Procédé selon la revendication 1, **caractérisé en ce que** les séquences de test sont périodiquement étendues pour former des séquences de préambule contenant des informations complémentaires en plus des séquences de test.

3. Procédé selon la revendication 1, **caractérisé en ce que** les symboles sont prélevés dans un alphabet de symboles dont la constellation de symboles est **caractérisée par** un contour circulaire.

4. Procédé selon la revendication 3, **caractérisé en ce que** le centre de la constellation des symboles est libre de symboles.

5. Procédé selon la revendication 1, **caractérisé en ce que** les symboles sont divisés en une information d'amplitude et en une information de phase et commandent un émetteur modulé séparément selon l'enveloppante et la phase.
